# EUROPÄISCHE PATENTSCHRIFT

(11) **EP 2 060 071 B1**
(45) Veröffentlichungstag und Bekanntmachung des Hinweises auf die Patenterteilung: **31.03.2010**
(21) Anmeldenummer: 07802948.5
(22) Anmeldetag: 28.08.2007
(51) Int. Cl.: H04L 12/56

(54) **VERFAHREN ZUR NACHFÜHRUNG VON NETZPARAMETERN**
METHOD FOR TRACKING NETWORK PARAMETERS
PROCÉDÉ POUR L'AJUSTEMENT DE PARAMÈTRES DE RÉSEAU

(30) Priorität: 01.09.2006 DE 102006041058
(43) Veröffentlichungstag der Anmeldung: 20.05.2009
(73) Patentinhaber: Nokia Siemens Networks GmbH & Co. KG, 81541 München (DE)
(72) Erfinder: CHARZINSKI, Joachim, 81825 München (DE); WALTER, Uwe, 76356 Weingarten (DE)
(86) Internationale Anmeldenummer: PCT/EP2007/058927
(87) Internationale Veröffentlichungsnummer: WO 2008/025769

(56) Entgegenhaltungen:
- WO-A-2006/032615
- WALTER U: "Automatische Netzoptimierung mittels eines zentralen Management-Knotens" WUERZBURGER WORKSHOP IP NETZMANAGEMENT, IP NETZPLANUNG UNDOPTIMIERUNG, XX, XX, 19. Juli 2005 (2005-07-19), Seiten 1-16, XP002356057
- MILBRANDT J ET AL: "Adaptive Bandwidth Allocation: Impact of Traffic Demand Models for Wide Area Networks" RESEARCH REPORT SERIES, XX, XX, Nr. 363, 1. Juni 2005 (2005-06-01), Seiten 1-12, XP002356058

## Beschreibung

Die Erfindung betrifft ein Verfahren zur Nachführung von Netzparametern eines mit Knoten und dazwischen liegenden Links gebildeten Kommunikationsnetzes mit Zugangskontrollen zwecks Begrenzung der Verkehrslast.

Eine der derzeit wichtigsten Entwicklungen auf dem Gebiet der Netze ist die Weiterentwicklung von herkömmlichen Datennetzen oder Paketnetzen für die Übertragungen von so genanntem Echtzeitverkehr, d.h. Sprache, Audio-Informationen und Videosignalen. Die Gewährleistung von Echtzeitverkehr setzt die Einhaltung von so genannten Dienstgütemerkmalen voraus. Übertragener Verkehr darf zur Erhaltung der Dienstgüte Schwellwerte für die Verzögerung bzw. der Latenz, den Verwurf von Paketen und den Jitter, d.h. die Schwankungen in der Übertragungszeit einzelner Pakete, nicht überschreiten. Eine wichtige Maßnahme für die Einhaltung von Dienstgüteparametern ist die Verkehrsbeschränkung für Paketnetze, über die Echtzeitverkehr übertragen werden soll. Diese Verkehrsbeschränkung wird in der Regel mit so genannten Zugangskontrollen vorgenommen, d.h. neu zu übertragender Verkehr muss angemeldet werden und wird nur zugelassen, wenn die Zulassung dieses Verkehrs nicht die Überschreitung einer Grenze (auch Budget genannt) für den maximal zuzulassenden Verkehr bewirken würde.

Bei einer Festsetzung von Grenzen für eine den Verkehr beschränkende Zugangskontrolle ist Folgendes zur berücksichtigen: Die Festsetzung der Grenzen soll einerseits die gewünschte Übertragungsqualität gewährleisten, andererseits soll der über das Netz übertragene Verkehr optimiert werden, d.h. die Wahrscheinlichkeit für eine Nichtzulassung von Verkehr soll möglichst minimiert werden. Deshalb orientiert man sich bei der Festsetzung von Grenzen üblicherweise an der so genannten Verkehrsmatrix, d.h. dem Verkehrsvolumen, das zwischen (Rand)Knoten des Netzes übertragen werden soll. Als Maß für die geeignete Festsetzung von Grenzen verwendet man häufig die so genannte Blockierwahrscheinlichkeit, d.h. ein Maß für die Wahrscheinlichkeit, dass ein zwischen zwei Knoten zu übertragender Verkehrsstrom nicht zugelassen wird bzw. die Häufigkeit, mit der ein solcher Verkehrsstrom abgewiesen wird. Eine Möglichkeit zu einer fairen Festsetzung von Grenzen ist, diese so festzusetzen, dass die Blockierwahrscheinlichkeiten für beliebige Richtungen über das Netz übertragene Verkehrsströme gleich sind. Eine wirtschaftlichere Festsetzung bevorzugt Verkehrsrichtungen, die mit einer hohen Verkehrsmenge beaufschlagt sind, um so den gesamten über das Netz übertragenen Verkehr zu steigern.

Eine Änderung des über das Netz zu übertragenen Verkehrsaufkommens und damit der Verkehrsmatrix resultiert in veränderten Blockierwahrscheinlichkeiten. Diese Veränderung der Blockierwahrscheinlichkeiten kann dazu führen, dass weniger Verkehr über das Netz übertragen wird als befördert werden könnte. Daher wird die Einstellung von den Grenzen für die Zugangskontrollen vom Betreiber bei Bedarf händisch an veränderte Verkehrssituationen angepasst.

Die Druckschrift DE 10 2004 045980 B3 offenbart ein Verfahren zur Nachführung von Netzparametern, bei dem die Verkehrsmatrix des Netzes regelmäßig ermittelt wird und überprüft wird, ob die Blockierwahrscheinlichkeit für einer Zugangskontrolle unterzogenen Verkehr gemäß der aktuellen Verkehrsmatrix ein Kriterium für einen planmäßigen Netzbetrieb erfüllt. Ein planmäßiger Netzbetrieb ist hierbei insbesondere dann gegeben, wenn die ermittelte Blockierwahrscheinlichkeit unterhalb eines Schwellenwerts liegt. In dem Verfahren wird bei der Nichterfüllung des Kriteriums für den planmäßigen Netzbetrieb zunächst versucht, neue Werte für im Rahmen der Zugangskontrolle verwendete Grenzen anhand der aktuellen Verkehrsmatrix zu bestimmen. Sollte nach Neufestsetzung der Grenzen die Blockierwahrscheinlichkeit das Kriterium für den planmäßigen Netzbetrieb erfüllen, werden die Grenzen auf die neuen Werte gesetzt. Der Druckschrift kann ferner entnommen werden, dass im Falle, dass eine Neubestimmung der Grenzen nicht zur Erfüllung des Kriteriums für den planmäßigen Netzbetrieb führt, in einem zweiten Schritt neue Werte für die Linkgewichte der zum Routing verwendeten Link-Kostenmetrik anhand der aktuellen Verkehrsmatrix mit Hilfe einer Optimierung berechnet werden. Anschließend wird mit Hilfe der neuen Link-Kostenmetrik wiederum überprüft, ob die neuen Linkgewichte zu Werten für die Grenzen führen, gemäß denen das Kriterium für den planmäßigen Netzbetrieb erfüllt ist. Sollte das Kriterium erfüllt sein, wird das Netz mit dem neuen Linkgewichten konfiguriert. Ein Nachteil des soeben diskutierten Dokuments besteht darin, dass eine Neufestsetzung der Grenzen über die Optimierung der Linkgewichte sehr rechenzeitaufwändig ist und es somit zu einer Verzögerung der Datenübertragung in dem Netz kommen kann.

Aufgabe der Erfindung ist es deshalb, ein Verfahren zur Nachführung von Netzparametern eines Kommunikationsnetzes zu schaffen, bei dem bei der Veränderung der Verkehrsmatrix bzw. der Topologie des Netzes die Grenzen für die Zugangskontrollen einfach und schnell angepasst werden können.

Diese Aufgabe wird durch die unabhängigen Patentansprüche gelöst. Weiterbildungen der Erfindung sind in den abhängigen Ansprüchen definiert.

Das erfindungsgemäße Verfahren wird für Kommunikationsnetze verwendet, welche aus einer Vielzahl von Knoten und dazwischen liegenden Links charakterisiert sind, wobei das Kommunikationsnetz vorzugsweise ein paketbasiertes IP-Netz (IP = Internet Protocol) ist. Das Kommunikationsnetz ist hierbei Zugangskontrollen unterworfen, über welche die Verkehrslast begrenzt wird. Die Zugangskontrollen werden dadurch erreicht, dass Budgets bzw. Grenzen festgelegt werden, welche angeben, bis zu welcher Verkehrslast ein in dem Netz angemeldeter Verkehr durch das Netz übertragen wird. Sollten diese Grenzen überschritten werden, kann kein planmäßiger Netzwerkbetrieb mehr gewährleistet werden und der angemeldete Verkehr wird zurückgewiesen und nicht im Netz übertragen. In dem erfindungsgemäßen Verfahren wird das Weiterleiten (auch als "Routen" bezeichnet) von Verkehr über eine sog. Link-Kostenmetrik mit Linkgewichten für die Links bewerkstelligt.

In dem erfindungsgemäßen Verfahren wird die Verkehrsmatrix des Netzes in regelmäßigen Abständen ermittelt (Schritt a)). Anschließend wird die (bereits oben erwähnte) Blockierwahrscheinlichkeit für einer Zugangskontrolle unterzogenen Verkehr aus der aktuellen Verkehrsmatrix bestimmt (Schritt b)). Schließlich wird in einem Schritt c) überprüft, ob die ermittelte Blockierwahrscheinlichkeit ein Kriterium für einen planmäßigen Netzbetrieb erfüllt. Im Falle, dass die Blockierwahrscheinlichkeit dieses Kriterium nicht erfüllt bzw. im Falle, dass eine Neubestimmung für im Rahmen der Zugangskontrollen verwendete Grenzen anhand der aktuellen Verkehrsmatrix nicht zu einer Blockierwahrscheinlichkeit führt, welche das Kriterium erfüllt, wird in einem Schritt d) anhand der aktuellen Verkehrsmatrix eine neue Link-Kostenmetrik zur Optimierung des Transports von Verkehr durch das Netz bestimmt. In einem Schritt e) werden dann neue Werte für im Rahmen der Zugangskontrollen verwendete Grenzen auf Basis der neuen Link-Kostenmetrik bestimmt und nach der Bestimmung der neuen Werte für die Grenzen wird überprüft, ob das Kriterium bei Neufestsetzung der Grenzen auf diese Werte erfüllt wird. Ist dies der Fall, werden im Schritt f) die Linkgewichte mit der neuen Link-Kostenmetrik im Netz konfiguriert und die Grenzen auf die neuen Werte festgelegt.

Das erfindungsgemäße Verfahren zeichnet sich durch eine besondere Ausgestaltung des Schritts d) aus, gemäß dem eine neue Link-Kostenmetrik zur Optimierung des Transports von Verkehr bestimmt wird. Im Schritt d) wird - im Gegensatz zum Stand der Technik - die Link-Kostenmetrik zunächst für den Transport von Verkehr durch das Netz ohne Berücksichtigung von Fehlerfällen optimiert, was wesentlich weniger Rechenaufwand erfordert als eine Optimierung, welche Fehlerfälle berücksichtigt. Unter einer Optimierung ohne Berücksichtigung von Fehlerfällen wird eine Optimierung verstanden, welche keine Link- oder Knotenausfälle im Netz einbezieht. Oftmals führt eine derartige Optimierung bereits dazu, dass im anschließenden Schritt e) festgestellt werden kann, dass das Kriterium bei Neufestssetzung der Grenzen auf der Basis der neuen Link-Kostenmetrik erfüllt ist. Nur im Falle, dass im Schritt e) festgestellt wird, dass das Kriterium auf der Basis der neuen, ohne Berücksichtung von Fehlerfällen optimierten Link-Kostenmetrik nicht erfüllt ist, wird nochmals zu Schritt d) zurückgegangen und die Link-Kostenmetrik für den Transport von Verkehr durch das Netz unter Berücksichtigung von Fehlerfällen optimiert. Unter einer Optimierung unter Berücksichtigung von Fehlerfällen wird eine Optimierung verstanden, welche Knoten- oder Linkausfälle mitberücksichtigt. Der zweite Schritt der Optimierung kommt hierbei jedoch nur zum Einsatz, wenn die erste, weniger rechenzeitintensive Optimierung nicht erfolgreich war. Somit führt das erfindungsgemäße Verfahren in vielen Fällen aufgrund der vorgeschlagenen zweistufigen Optimierung in viel kürzerer Zeit zu gemäß der aktuellen Verkehrsmatrix geeigneten Grenzen bzw. Budgets, über welche die Zugangskontrollen im Netz geregelt werden.

In einer bevorzugten Ausführungsform des erfindungsgemäßen Verfahrens umfasst die ggf. durchgeführte Optimierung der Link-Kostenmetrik unter Berücksichtigung von Fehlerfällen eine erste Optimierung, gemäß der:
- in mehreren Optimierungsläufen unterschiedliche Link-Kostenmetriken, insbesondere für Multi-Path-Routing, ohne Berücksichtigung von Fehlerfällen ermittelt werden,
- für vorgegebene Fehlerfälle die Lastverteilungen dieser Link-Kostenmetriken in eine Liste von Fehlermustern aufgenommen werden, und
- von den Link-Kostenmetriken diejenige ausgewählt wird, die in den Fehlerfällen die geringste maximale Linkauslastung erzeugt.

Diese Optimierung erfordert sehr wenig Rechenzeit, da sie zunächst ohne Berücksichtigung von Fehlerfällen Link-Kostenmetriken ermittelt. Anschließend werden Fehlerszenarien aus einer Liste von Fehlermustern auf der Basis der ermittelten Link-Kostenmetriken betrachtet und es wird diejenige Link-Kostenmetrik ausgewählt, welche die geringste maximale, vorzugsweise relative Linkauslastung aller Links aufweist. Die Fehlerfälle werden somit nicht bei der eigentlichen Optimierung, sondern anschließend über das Kriterium der geringsten maximalen Linkauslastung berücksichtigt.

In einer weiteren bevorzugten Ausführungsform kann die Optimierung der Link-Kostenmetrik unter Berücksichtigung von Fehlerfällen alternativ oder zusätzlich zu der o.g. ersten Optimierung eine zweite Optimierung umfassen, gemäß der eine Liste vorgegebener Fehlermuster vorgegeben ist und die Link-Kostenmetriken, insbesondere für Multi-Path-Routing, für die Liste vorgegebener Fehlermuster in Bezug auf die maximale, vorzugsweise relative Linkauslastung optimiert werden, wobei das Optimierungsziel insbesondere die geringste maximale Linkauslastung ist. Dieses Verfahren ist zwar rechenzeitintensiv, liefert jedoch für jedes mögliche Fehlerszenario die optimale Link-Kostenmetrik.

In einer weiteren Ausführungsform des erfindungsgemäßen Verfahrens wird sowohl die erste als auch die zweite Optimierung verwendet, wobei zunächst die erste Optimierung durchgeführt wird und im Falle, dass im anschließenden Schritt e) festgestellt wird, dass das Kriterium bei Neufestsetzung der Grenzen auf Basis der gemäß der ersten Optimierung optimierten Link-Kostenmetrik nicht erfüllt ist, zu Schritt d) zurückgegangen wird und die zweite Optimierung durchgeführt wird. Auf diese Weise wird ein mehrstufiges Verfahren geschaffen, bei dem schrittweise die Optimierung verbessert wird, um zu erreichen, dass die Blockierwahrscheinlichkeit das Kriterium für einen planmäßigen Netzbetrieb erfüllt.

In einer weiteren, bevorzugten Ausführungsform der Erfindung wird der Netzbetreiber alarmiert, falls das Kriterium nicht erfüllt wird. Der Netzbetreiber hat eine Möglichkeit, entsprechende Gegenmaßnahmen einzuleiten, um sein Netz derart anzupassen, dass die angemeldete Verkehrslast im Netz getragen werden kann.

Gemäß einer besonders bevorzugten Ausführungsform ist das Kriterium für den planmäßigen Netzwerkbetrieb über die Einhaltung eines Schwellenwertes für die Blockierwahrscheinlichkeit gegeben.

In einer weiteren Ausgestaltung der Erfindung wird bei der Bestimmung neuer Werte für die Grenzen die Topologie des Netzes berücksichtigt, wobei insbesondere eine Änderung der Topologie des Netzes die Durchführung des erfindungsgemäßen Verfahrens auslöst. Auf diese Weise wird sichergestellt, dass die Netzparameter immer an die aktuelle Netztopologie angepasst werden.

In einer weiteren Ausführungsform wird das erfindungsgemäße Verfahren mit Hilfe eines zentralen Netzkontrollservers durchgeführt, wobei der zentrale Netzkontrollserver während der Durchführung des Verfahrens vorzugsweise einen oder mehrere Netzparameter dem Netzbetreiber bereitstellt. In einer weiteren Ausführungsform umfassen diese bereitgestellten Netzparameter die Blockierwahrscheinlichkeit und/oder die Paketverzögerung zwischen Knoten und/oder Paketverluste zwischen Knoten. Vorzugsweise berücksichtigt der zentrale Netzkontrollserver aktuelle und vergangene Netzparameter und speichert sie in einer entsprechenden Datenbank.

In einer weiteren Ausgestaltung des erfindungsgemäßen Verfahrens werden die von dem zentralen Netzkontrollserver bereitgestellten Netzparameter durch den Netzbetreiber abgerufen und/oder automatisiert an den Netzbetreiber übermittelt.

Der zentrale Netzkontrollserver kann in einer Ausführungsform aus Netzparametern Tariftabellen für den Netzbetreiber ermitteln. Bei der Ermittlung solcher Tariftabellen bestimmt der zentrale Netzkontrollserver vorzugsweise aus den gesammelten Messdaten die zu jeweiligen Tageszeiten zu erwartende Verkehrslast und schätzt daraus ab, wie viel zusätzliche Verkehrslast zu der jeweiligen Tageszeit ohne Ausfall von Knoten und/oder Links von dem Netz noch getragen werden kann. In einer bevorzugten Ausführungsform wird bei der Ermittlung der Tariftabellen eine vom Netzbetreiber bereitgestellte Funktion berücksichtigt, welche in Abhängigkeit von der Tageszeit angibt, wie eine Tarifänderung die Verkehrslast verändert, wobei der zentrale Netzkontrollserver mit Hilfe der Funktion berechnet, welche Tarifänderung zu einer jeweiligen Tageszeit zu einer gleichmäßigen Verkehrslast im Netz führt.

Neben dem oben beschriebenen Verfahren betrifft die Erfindung ferner ein Kommunikationsnetz, welches derart ausgestaltet ist, dass in dem Kommunikationsnetz das erfindungsgemäße Verfahren durchführbar ist. Ein solches Kommunikationsnetz umfasst vorzugsweise einen zentralen Netzkontrollserver, eine Vielzahl von Routern, wobei in jedem Knoten ein Router vorgesehen ist, sowie eine Vielzahl von Netzzugangskontrollrechnern, wobei jedem Router ein Netzzugangskontrollrechner zugeordnet ist.

Neben dem Kommunikationsnetz betrifft die Erfindung ferner einen Netzrechner zur Verwendung als zentralen Netzkontrollserver in dem obigen Kommunikationsnetz, wobei der Netzrechner für die verteilte Durchführung des erfindungsgemäßen Verfahrens ausgestaltet ist und Mittel zur Durchführung eines Teils der Schritte des Verfahrens aufweist sowie Mittel zur Kommunikation mit zumindest einer weiteren Vorrichtung zwecks verteilte Durchführung des Verfahrens.

Im Folgenden wird der Erfindungsgegenstand im Rahmen von Ausführungsbeispielen anhand von Figuren näher erläutert. Es zeigen:
- Figur 1: den Ablaufplan einer erfindungsgemäßen Ausführungs- form des Verfahrens,
- Figur 2: den Ablaufplan aus Figur 1 mit zusätzlich vorgese- henem Input bei Änderung der Netztopologie,
- Figur 3: eine schematische Darstellung eines Netzkontroll- servers mit den für die Erfindung benötigten Funk- tionen, und
- Figur 4: eine Anordnung eines paketvermittelten Kommunikati- onsnetzes, in dem das erfindungsgemäße Verfahren durchführbar ist.

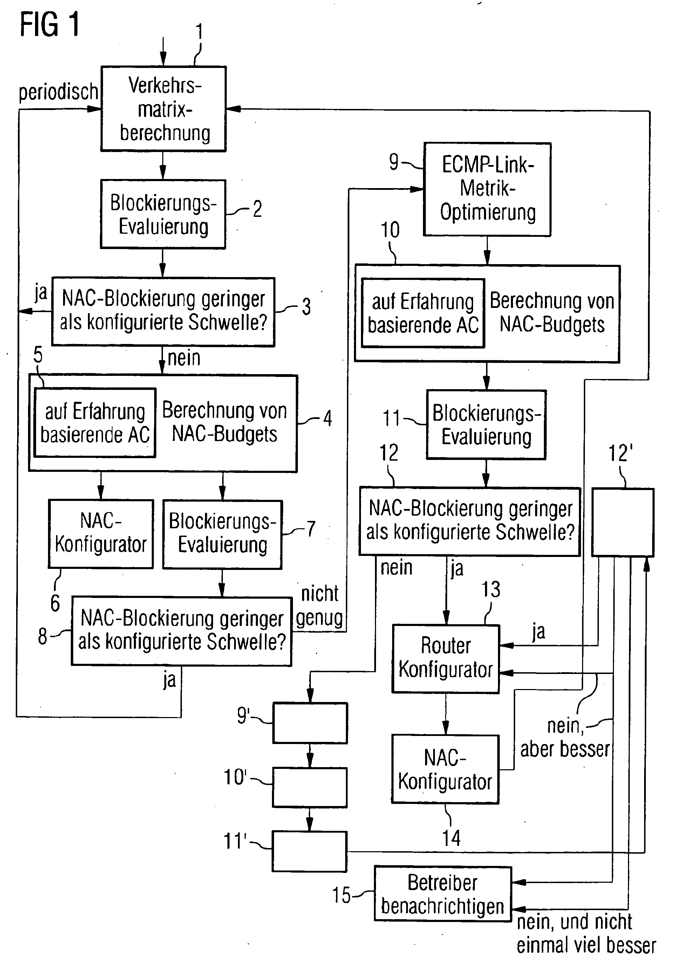

In Figur 1 sind die einzelnen, periodisch durchgeführten Schritte einer Ausführungsform des erfindungsgemäßen Verfahrens dargestellt:
1: Berechnung der Verkehrsmatrix.
2: Berechnung der Blockierwahrscheinlichkeiten.
3: Überprüfung, ob die Blockierwahrscheinlichkeiten Schwellenwerte übersteigen. Falls nicht, erfolgt nach einer Periodendauer wieder eine Neuberechnung der Verkehrsmatrix. Falls ein Schwellenwert überschritten wird, wird mit Punkt 4 fortgefahren.
4: Die Grenzen für die Zugangskontrollen werden neu berechnet. Eine Anpassung der berechneten Grenzen kann auf Grundlage von Erfahrungswerten zusätzlich stattfinden. Erfahrungsgemäß können berechnete oder nominelle Grenzen überschritten werden, weil die tatsächlich übertragene Verkehrsmenge in der Regel geringer ist, als die für die Übertragung angemeldete. Daraus kann man einen Erfahrungswert für eine Überbuchung ableiten (Schritt 5) und die Grenzen entsprechend anpassen (Schritt 6).
5: Einbeziehung eines Erfahrenswertes für Überbuchung.
6: Anpassung der Grenzen nach Maßgabe der Überbuchung.
7: Berechnung der Blockierwahrscheinlichkeiten.
8: Überprüfung, ob die berechneten Blockierwahrscheinlichkeiten unterhalb der Schwellen liegen. Falls die Schwellen nicht überschritten werden, wird wieder nach einer Periodendauer eine Neuberechnung der Verkehrsmatrix vorgenommen. Anderenfalls folgt Schritt 9.
9: Neuoptimierung der Link-Kostenmetriken, wobei beispielhaft die ECMP-Optimierung angegeben ist. In Schritt 9 erfolgt zunächst eine Optimierung ohne die Berücksichtigung von Fehlermustern, d.h. die Link-Kostenmetrik wird für den Normalfall ohne Knoten- bzw. Linkausfälle optimiert.
10: Neuberechnung der Grenzen. Die Grenzen werden analog zu dem obigen Schritt 5 auf der Basis der neuen, ohne Berücksichtigung von Fehlerfällen optimieren Link-Kostenmetrik ermittelt, wobei ggf. wiederum eine Anpassung auf Grundlage von Erfahrungswerten erfolgt. Die Berechnung der neuen Grenzen oder Budgets erfolgt vorzugsweise ohne die Berücksichtigung von Fehlerfällen.
11: Berechnung der Blockierwahrscheinlichkeiten auf der Basis der neuen Grenzen.
12: Überprüfung, ob die neu berechneten Blockierwahrscheinlichkeiten niedriger als die Schwellenwerte sind. Falls das Schwellenkriterium nicht eingehalten wird, wird zum Schritt 9' übergegangen.
9': Neuoptimierung der Link-Kostenmetriken analog zum vorhergehenden Schritt 9, jedoch unter Berücksichtigung von Fehlerfällen. Hierbei wird insbesondere eine Neuoptimierung auf der Basis des Anspruchs 2 durchgeführt, welche wenig Rechenzeit benötigt.
10': Neuberechnung der Grenzen mit der neuen Link-Kostenmetrik, analog zu Schritt 10. Hierbei wird bei der Ermittlung der Grenzen vorzugsweise das Auftreten von Fehlerfällen mitberücksichtigt.
11': Berechnung der Blockierwahrscheinlichkeiten auf der Basis der neuen, in Schritt 10' berechneten Grenzen.
12': Überprüfung, ob die neu berechneten Blockierwahrscheinlichkeiten niedriger sind als die Schwellenwerte, analog zu Schritt 12. Falls das Schwellenkriterium nicht eingehalten wird und das Ergebnis nach der Optimierung der Link-Kostenmetrik auch nicht viel besser als zuvor ist (d.h. die Blockierwahrscheinlichkeit ist nicht wesentlich kleiner geworden), wird der Netzbetreiber in Schritt 15 informiert, was durch den Pfeil mit der Bezeichnung "no, and not even much better" angedeutet ist. Sollte das Schwellenkriterium in Schritt 12' erfüllt sein, wird der Router in Schritt 13 entsprechend der neuen Link-Kostenmetrik konfiguriert. Anschließend werden in Schritt 14 die Grenzen für die Zugangskontrolle auf die neu berechneten Werte festgelegt. Sollte der Fall auftreten, dass das Schwellenkriterium zwar immer noch nicht erfüllt ist, jedoch die Blockierwahrscheinlichkeit deutlich näher an der Schwelle liegt, wird zum einen der Netzbetreiber in Schritt 15 informiert und zum anderen auch eine Router-Konfiguration in Schritt 13 auf der Basis der neu berechneten Link-Metriken vorgenommen. Ferner werden in Schritt 14 die Grenzen für die Zugangskontrolle auf die neu berechneten Werte festgelegt.

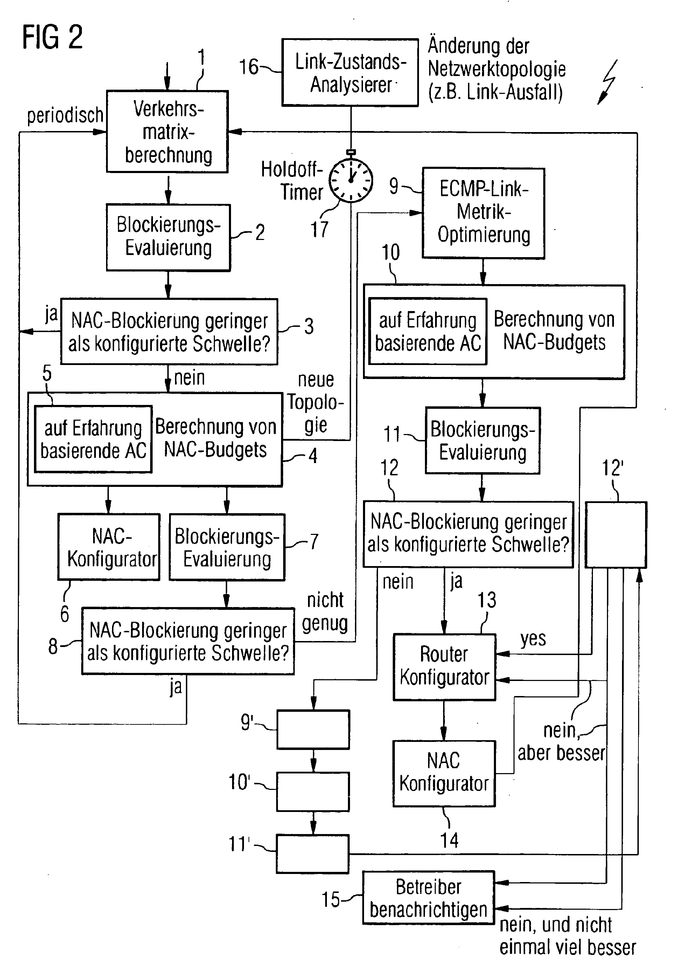

Fig. 2 zeigt eine Erweiterung des Vorgehens gemäß Fig. 1. In dem Verfahren der Fig. 2 wird eine Neuberechung der Grenzen in Schritt 5 nicht nur bei Überschreiten der Schwellenwerte in Schritt 3 vorgenommen, sondern auch dann, wenn sich die Topologie im Netzwerk verändert. Die Veränderung der Topologie im Netzwerk wird hierbei in einem Analyseschritt 16 erfasst, wobei in diesem Schritt insbesondere der Ausfall von Links im Netz ermittelt wird. Es wird hierbei ferner ein Timer 17 verwendet, der zu laufen beginnt, wenn ein Link ausfällt. Erst wenn eine vorgegebene Zeitperiode abgelaufen ist, ohne dass der ausgefallene Link im Netzwerk wieder zurückkehrt, wird die Berechnung gemäß Schritt 4 ausgelöst. Hierdurch wird sichergestellt, dass nur bei längeren, permanenten Linkausfällen eine Neuberechnung der Grenzen durchgeführt wird.

Die in Bezug auf Fig. 1 und 2 beschriebenen Verfahren können noch derart abgewandelt werden, dass nach der Durchführung der Optimierung in Schritt 9' und dem anschließenden Durchlaufen der Schritte 10', 11' und 12' nochmals eine weitere Optimierung durchgeführt wird, sofern die Blockierwahrscheinlichkeiten in Schritt 12' nicht unterhalb der Schwellenwerte liegen. Die weitere Optimierung ist hierbei eine gegenüber der vorangegangenen Optimierung 9' verbesserte Optimierung, welche jedoch mehr Rechenzeit benötigt. Insbesondere kann die Optimierung gemäß Anspruch 3 eingesetzt werden. Nach dem Durchführen dieser weiteren Optimierung folgen analog die weiteren Schritte der Neuberechnung der Grenzen, der Berechnung der Blockierwahrscheinlichkeiten und der Überprüfung, ob die Blockierwahrscheinlichkeiten unterhalb der Schwellenwerte liegen. Nach der Überprüfung werden die gleichen, in Bezug auf den vorangegangen Schritt 12' erläuterten Schritte je nach Ausgang der Überprüfung eingeleitet.

Das erfindungsgemäße Verfahren kann mit einer Vielzahl von Optionen und Erweiterungen versehen werden. In einer Variante kann der Netzkontrollserver NCS Berechnungen durchführen, die mit dem sog. GoS- oder QoS-Parametern des Netzes zusammenhängen (GoS = Grade of Service, QoS = Quality of Service). Es werden hierbei solche GoS- bzw. QoS-Parameter berücksichtigt, welche für den Netznutzer relevant sind. Solche Parameter sind die Blockierwahrscheinlichkeit, die Grenzen oder Budgets sowie ausgewählte Parameter für die Algorithmen zum Verwalten des Netzzugangs in den Netzzugangskontrollrechnern NAC. Der Netzkontrollserver kennt beispielsweise die Blockierwahrscheinlichkeit im Netz, und zwar sowohl aus eigenen Berechnungen als auch aus Messungen an den Netzzugangskontrollrechnern. Diese Größe kann der Netzkontrollserver dann dem Netzbetreiber an einer geeigneten Schnittstelle zur Verfügung stellen, so dass dieser für ein bestimmtes, mit dem Endkunden vereinbartes Verkehrsangebot auch eine Zusage zur Blockierwahrscheinlichkeit machen kann.

Erfindungsgemäß können beliebige, im Netzkontrollserver berechnete Daten bzw. Netzparameter dem Netzbetreiber an einer geeigneten Schnittstelle zur Verfügung gestellt werden. Vorzugsweise werden hierbei solche Daten zur Verfügung gestellt, welche für das SLA (SLA = Service Level Agreement) oder die SLS (SLS = Service Level Specification, Teil eines SLA) relevant sind. Der Netzbetreiber kann diese Parameter dann in seinen SLAs verwenden, die er mit seinen Kunden schließt. Insbesondere sind hierbei die Parameter Blockierwahrscheinlichkeit, Paketverzögerung und Paketverlust relevant. Bei der Paketverzögerung kann der Netzkontrollserver auf Basis der für die Netzzugangskontrollrechner ausgewählten Algorithmen zur Berechnung effektiver Bandbreiten, auf Basis der vorhandenen Budgets und auf der Basis der aus der Netztopologie bekannten Laufzeiten von Paketen auf den Leitungen des Netzes bestimmen, welche Verteilung der Paketdurchlaufzeiten durch das Netz von einem Eingang zu einem Ausgang zu erwarten ist. Entsprechend kann er dem Netzbetreiber auf Anforderung die entsprechenden Mittelwerte pro Eingangs-Ausgangs-Knotenpaar oder über das ganze Netz zur Verfügung stellen (eventuell gewichtet mit dem jeweiligen Verkehrsaufkommen). Bei Paketverlusten, kann der Netzkontrollserver auf Basis der verwendeten Zugangskontroll-Algorithmen und eines einfachen analytischen Modells (z.B. dem M/D/1-s-Warteschlangenmodell) abschätzen, welche Paketverlustraten zu erwarten sind, und er kann diese Paketverluste dem Betreiber pro Eingangs-Ausgangs-Knotenpaar oder netzweit gemittelt zur Verfügung stellen.

In dem erfindungsgemäßen Verfahren sind noch folgende weitere Optionen möglich:
- Die Grenzwerte für Blockierungen, Verzögerungen und Verluste können entweder auf der Basis der eingestellten Parameter im Netz bestimmt werden, oder es kann der umgekehrte Weg bestritten werden, wonach der Netzbetreiber einen Grenzwert vorgibt und der Netzkontrollserver die entsprechenden Betriebsparameter der Netzzugangsrechner wählt. Dies ist für Verzögerungen und Verluste möglich. Die Blockierwahrscheinlichkeit ergibt sich jeweils aus den Netzzugangs-Algorithmen, den Budgets und dem Verkehrsangebot. Falls der Netzbetreiber einen Blockierungswert vorgibt, kann der Netzkontrollserver einen Alarm ausgeben, wenn der vorgegebene Wert überschritten wird.
- Netzparameter können, wie oben beschrieben, durch den Netzbetreiber abgerufen werden. Alternativ können die Parameter auch direkt über ein geeignetes Verfahren (Protokoll, Datenschnittstelle) in das Vertragsmanagement des Betreibers einfließen, welches die SLAs für Endkunden zur Verfügung stellt. Die durch den Netzbetreiber zugesicherten Parameter können beispielsweise auf einer automatisch generierten Webseite zur Verfügung gestellt werden.
- Die momentanen QoS-Parameter (insbesondere die Blockierwahrscheinlichkeit, die Verzögerungsverteilung und die Verluste) können auf automatisch generierten Webseiten abrufbar gemacht werden, so dass die Kunden sich (bei einem gewissen Vertrauen in die Messarchitektur des Betreibers) selbst von der Einhaltung der Parameter überzeugen können.
- Der Netzkontrollserver führt über Messwerte aus dem Netz, die für die ihm bekannten SLA-Parameter relevant sind, eine Historie bzw. speichert diese Werte in einer Datenbank ab. Dadurch wird das Qualitätsmanagement des Betreibers unterstützt, und er kann im Falle von Kundenbeschwerden die eigenen Messwerte überprüfen.
- Je nach Wunsch des Netzbetreibers können die Parameter über die Zeit gemittelt werden, oder es können nur die für das Verkehrsangebot der Hauptverkehrszeit (z.B. Hauptverkehrsstunde) geltenden Parameter verwendet werden.
- In die Blockierungswerte können auch Erfahrungen des Netzkontrollservers über die Häufigkeit und Dauer von Leitungsausfällen im Netz einbezogen werden.

In einer weiteren Variante des erfindungsgemäßen Verfahrens besteht die Möglichkeit, dass der Netzkontrollserver die von dem Netzbetreiber verwendeten Tarife erstellt oder zumindest verifiziert, sofern ein Netzbetreiber seinen Kunden für die Reservierung von Bandbreite mit QoS-Zusicherung lastabhängige Tarife anbietet. Dies kann dadurch realisiert werden, dass der Netzkontrollserver die Tariftabellen (d.h. die Informationen darüber, für welche Bandbreite zu welchem Zeitpunkt wieviel bezahlt werden muss) automatisch erstellt, wobei er hierzu die aus Messdaten gesammelte Erfahrung verwendet, zu welcher Tageszeit welches Verkehrsangebot zu erwarten ist. Der Netzkontrollserver kann daraus abschätzen, wieviel zusätzliches Verkehrsangebot zur jeweiligen Tageszeit noch tragbar ist. Mit Hilfe einer zusätzlichen, vom Betreiber bereitzustellenden Funktion F1 kann der Netzkontrollserver dann abschätzen, welche Tarifänderung sich jeweils für welche Tageszeit anbietet. Die Funktion F1 bildet hierbei das Paar (Tarifänderung, Tageszeit) in ein entsprechendes, zu erwartendes Zusatzangebot an Verkehr ab. Es ist zu erwarten, dass die Funktion bezüglich der Tarifänderung eine negative Ableitung besitzt, d.h. eine Senkung des Tarifs wird zu einer Erhöhung des angemeldeten Verkehrsangebots führen. Der Netzkontrollserver bestimmt hierbei durch Invertierung der Funktion F1 die zur jeweiligen Tageszeit sinnvolle Tarifänderung mit dem Ziel, eine gleichmäßige Auslastung des Netzes für die Tageszeiten und einen möglichst hohen Gewinn für den Betreiber sicherzustellen.

Bei der Verwendung von lastabhängigen, durch den Netzkontrollserver berechneten Tarifen, sind folgende Optionen möglich:
- Die jeweils von dem Netzkontrollserver berechneten Tarife werden automatisch über eine geeignete Schnittstelle (z.B. automatisch erzeugte Webseite oder als Bestandteil der Signalisierung zwischen Dienstnutzer und Netzzugangskontrollrechner) den Endkunden zur Verfügung gestellt.
- Alternativ stellt der Netzkontrollserver die vorgeschlagenen Tarife nur dem Netzbetreiber zur Verfügung, der daraufhin gelegentlich seine veröffentlichten Tarife überprüft.
- Der Netzbetreiber kann die gewünschten tageszeitlichen Grenzen für die Tarife fest vorgeben und den Netzkontrollserver selbst die Tarife bestimmen lassen. Im letzteren Fall kann der Betreiber eine maximale Anzahl und eine Mindestdauer von Tariffenstern vorgeben.
- Der Netzkontrollserver kann die obige Funktion F1, die üblicherweise vom Betreiber bereitgestellt wird, selbst empirisch ermitteln, indem er langsam und in kleinen Schritten in verkehrsschwachen Zeiten die Tarife senkt und die Änderung des Verkehrsangebots beobachtet.
- Der Netzbetreiber kann bei automatischem Betrieb eine untere Schranke für die Tarife explizit vorgeben.
- Die Funktion F1 kann für unterschiedliche Netz-Eingänge und für unterschiedliche Rand-zu-Rand-Beziehungen unabhängig gewählt werden oder sie kann für das gesamte Netz als homogen angenommen werden.

Mit dem erfindungsgemäßen Verfahren wird insbesondere der Vorteil erreicht, dass die Reaktionen des Netzkontrollservers bei der Metrikoptimierung durch Verwendung einer rechenzeitsparenden Metrikberechnung ohne Fehlerfälle beschleunigt werden, so dass der Netzkontrollserver in kritischen Fällen (zu hohe Blockierung, Metriken müssen optimiert werden) schneller eine gute Lösung finden kann, als wenn er sofort die rechenzeitaufwändige Optimierung unter Einschluss von Fehlerfällen durchführen würde.

Die Übermittlung von Netzparametern zwischen dem Netzkontrollserver und dem Netzbetreiber gemäß einer Variante der Erfindung verringert für den Netzbetreiber den Aufwand bei der Festlegung von Parametern für SLAs. Außerdem wird das Risiko des Netzbetreibers verringert, wegen Nichteinhaltung von in der SLAs festgelegten Parametern Ausgleichzahlungen leisten zu müssen.

In der Variante der Erfindung, bei der der Netzkontrollserver lastabhängige Tarife ermittelt, ist die Realisation solcher Tarife durch den Netzbetreiber einfacher möglich und das Netz kann ohne großes Risiko durch den Netzbetreiber besser ausgelastet werden.

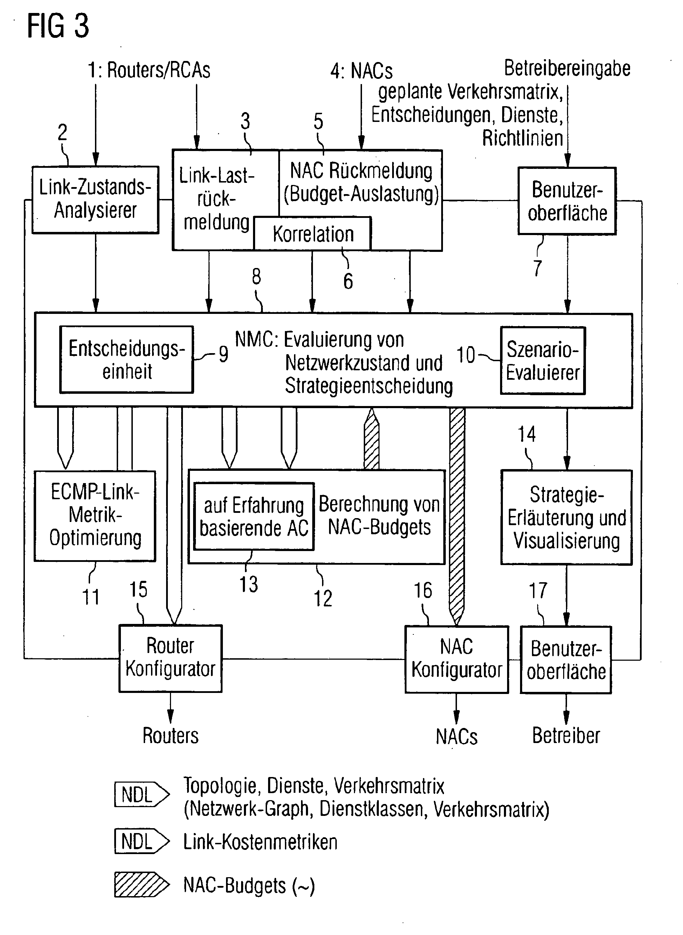

Figur 3 zeigt den Aufbau eines Netzkontrollservers mit Funktionen für ein erfindungsgemäßes Vorgehen. Dieser Netzkontrollserver erhält drei verschiedene Typen von Input, und zwar Input von Routern des Netzes bzw. so genannten Router-Control-Agents (RCA) 1, welche ein Modul zur Topologieanalyse 2 und ein Modul zur Kontrolle der Linklast 3 mit Informationen versorgen. Weiterer Input kommt von den Netzwerk-Kontrollinstanzen bzw. den Netzzugangskontrollrechnern 4, welche die aktuelle Auslastung der Grenzen für die Zugangskontrollen und andere Informationen an ein Modul 5 zur Überwachung der Budget-Ausnutzung übermitteln. Schließlich besteht die Möglichkeit, geplante Verkehrsmatrizen, Dienste, Bewertungskriterien und ähnliches über eine Benutzerschnittstelle 7 einzugeben. Ein zentraler Bestandteil des Netzkontrollservers ist ein Modul 8 für die Beurteilung des Betriebszustands des Netzes und für Strategieentscheidungen. Diesem Modul wird - eventuell in vorverarbeiteter bzw. aufbereiteter Form, z.B. mittels eines Verarbeitungsmoduls 6 - der gesamte Input des Netzkontrollservers zugeleitet. Das Modul enthält einen Bestandteil für zu treffende Entscheidungen 9 und einen Bestandteil für die Beurteilung von verschiedenen Szenarien 10. Mit Hilfe des Zentralmoduls 8 werden dann folgende Informationen bzw. Ergebnisse erzeugt: eine optimierte Linkmetrik 11, neu berechnete Grenzen für die Zugangskontrolle 12, eventuell durch Erfahrungswerte angepasst 13, und eine Aufbereitung der Strategie mit Erklärungen 14. Der Netzkontrollserver hat folgende Output-Module: einen Konfigurator für Router 15, einen Konfigurator für Grenzen für die Zugangskontrollen 16 und eine Benutzerschnittstelle 17 für an den Netzbetreiber bzw. die Netzverwaltung weiterzugebende Informationen.

Dieser Netzkontrollserver kann benutzt werden, um die in Figur 1 bzw. Figur 2 dargestellten Verfahren zu implementieren. Alternativ können auch diese Verfahren in anderen Vorrichtungselementen, eventuell in verteilter Form, realisiert werden.

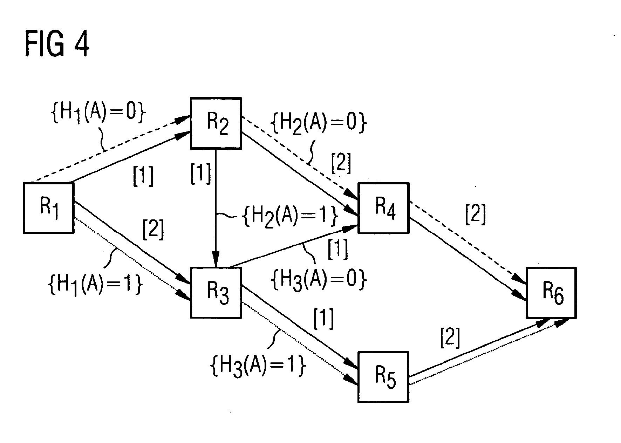

Figur 4 zeigt einen Ausschnitt aus einem paketvermittelnden Kommunikationsnetz, in dem das erfindungsgemäße Verfahren eingesetzt werden kann. Das Kommunikationsnetz besteht aus sechs Netzknoten bzw. Routern R1 bis R6. Netzknoten R1 ist über jeweils einen Verbindungsweg mit Netzknoten R2 und R3 verbunden. Netzknoten R2 ist wiederum über jeweils einen Verbindungsweg mit Netzknoten R3 und R4, Netzknoten R3 wiederum über jeweils einen Verbindungsweg mit Netzknoten R4 und R5 verbunden. Die Netzknoten R4 und R5 sind jeweils über einen Verbindungsweg mit dem Netzknoten R6 verbunden.

Anhand der Figur 4 wird im folgenden beispielhaft erläutert, wie Datenpakete unter Berücksichtigung von Link-Kostenmetriken mittels Hash-Funktion-Verfahren vom (Eingangs-) Netzknoten R1 zum (Ziel-) Netzknoten R6 weitergeleitet bzw. geroutet und aufgeteilt werden. Die Zahlen in eckigen Klammern stellen die in diesem Fall bidirektional zu verstehenden Kostenmetriken für die Verbindungswege respektive Links dar. Für den Verbindungsweg zwischen Netzknoten R1 und R2 ist dies 1, für den Verbindungsweg zwischen Netzknoten R1 und R3 ist dies 2, für R2 - R3: 1, für R2 - R4: 2, für R3 - R4: 1, für R3 - R5: 1, für R4 - R6: 2 und für R5 - R6: 2. Die Angaben in geschweiften Klammern sollen darstellen, dass Netzknoten R1 ein Datenpaket mit der Adresskombination A zu Netzknoten R2 weiterleitet, wenn die Hash-Funktion H1 im Netzknoten R1 den Wert H1 von A = 0, d.h. H1(A)=0, liefert oder zu Netzknoten R3, wenn die Hash-Funktion H1 von A gleich 1, d.h. H1(A)=1, ist. Entsprechend leitet Netzknoten R2 ein Datenpaket mit der Hash-Funktion H2 von A = 0 zu Netzknoten R4 weiter und ein Paket mit der Hash-Funktion H2 von A = 1 zu Netzknoten R3 weiter. Der Netzknoten R3 leitet Pakete mit der Hash-Funktion H3 von A = 0 an Netzknoten R4 weiter und Pakete mit der Hash-Funktion H3 von A = 1 an Netzknoten R5. Die Netzknoten R4 und R5 sollen in diesem Beispiel die Datenpakete bzw. den Verkehr nicht weiter aufteilen und zu Netzknoten R6 weiterleiten.

Folgende Optionen können bei der Optimierung der Link-Kostenmetriken mit Berücksichtigung von Fehlerfällen bzw. Fehlermustern angewendet werden:
- Vorgabe der zu berücksichtigenden Fehlermuster systematisch, z.B. als Kombination der Komponenten "kein Ausfall", "alle einzelnen Linkfehler", "alle doppelten Linkfehler", "alle Knotenfehler".
- Vorgabe der zu berücksichtigenden Fehlermuster als Liste der zu betrachtenden Szenarien.
- Bestimmung der zu betrachtenden Szenarien z.B. aus Geschäftsbeziehungen, so dass die Verkehrsbeziehungen der wichtigsten Kunden besonders gut geschützt werden.
- Besonderer Schutz wichtiger Verkehrswege oder häufiger ausfallender Links durch gezieltes Erzeugen von Mehrwege-Alternativen an der entsprechenden Stelle.
- Einschluss nur solcher Linkfehler, die nicht auf der physikalischen Ebene (z.B. durch SONET/SDH) bereits abgefangen werden, in der Liste der zu berücksichtigenden Szenarien.
- Wenn Router mit unterschiedlicher Verfügbarkeit eingesetzt werden:
   Einschluss nur derjenigen Router, die weniger verfügbar sind (z.B. weil nicht alle Komponenten gedoppelt sind), in die Liste der zu berücksichtigenden Knotenausfälle.
- Automatische Bestimmung der zu berücksichtigenden Ausfallkomponenten anhand von Langzeitbeobachtungen der Fehlerhäufigkeit im Netzbetrieb.
- Automatische Bestimmung der zu berücksichtigenden Ausfallkomponenten anhand von Informationen über vorhandene Ersatzwege aus dem Physical Layer (Transportnetz, z.B. Signalisier-Information aus ASON/ASTN Automatically Switched Optical Network bzw. Automatically Switched Transport Network).

Bei einer Optimierung, bei der zunächst in mehreren Optimierungsläufen unterschiedliche Link-Kostenmetriken ohne Berücksichtigung von Fehlerfällen ermittelt werden (wie in Anspruch 2 definiert), sind folgende Optionen möglich:
Von den Optimierungsläufen ohne Berücksichtigung von Fehlerfällen (erster Schritt) werden nur diejenigen Metriken in die anschließende Auswahl einbezogen, die jeweils im Gutfall die geringste maximale Linklast erzeugt haben. Dies kann ein absolutes Kriterium sein oder es kann ein relatives Kriterium sein. Z.B. können in die Auswahlrunde (zweiter Schritt) nur die beste Metrik und solche, bei denen die maximale Linklast nicht mehr als einen gegebenen Faktor (z.B. 1.1 für 10 %) schlechter ist, einbezogen werden. Durch diese Vorauswahl (zusätzlicher Auswahlschritt) wird der Tradeoff zwischen Auslastung im Gutfall und Auslastung im Fehlerfall geregelt.

## Patentansprüche

1. Verfahren zur Nachführung von Netzparametern eines mit Knoten und dazwischen liegenden Links gebildeten Kommunikationsnetzes, insbesondere eines paketbasierten IP-Netzes, mit Zugangskontrollen zwecks Begrenzung der Verkehrslast, wobei die Netzparameter eine Link-Kostenmetrik mit Linkgewichten für die Links umfassen, bei dem:
a) eine Verkehrsmatrix des Netzes regelmäßig ermittelt wird,
b) eine Blockierwahrscheinlichkeit für einer Zugangskontrolle unterzogenen Verkehr aus der aktuellen Verkehrsmatrix bestimmt wird,
c) überprüft wird, ob die ermittelte Blockierwahrscheinlichkeit ein Kriterium für einen planmäßigen Netzbetrieb erfüllt,
d) im Falle, dass die Blockierwahrscheinlichkeit das Kriterium nicht erfüllt und/oder eine Neubestimmung für im Rahmen der Zugangskontrollen verwendete Grenzen anhand der aktuellen Verkehrsmatrix nicht zu einer Blockierwahrscheinlichkeit führt, welche das Kriterium erfüllt, anhand der aktuellen Verkehrsmatrix eine neue Link-Kostenmetrik zur Optimierung des Transports von Verkehr durch das Netz bestimmt wird,
e) neue Werte für im Rahmen der Zugangskontrollen verwendete Grenzen auf Basis der neuen Link-Kostenmetrik bestimmt werden und nach der Bestimmung der neuen Werte für die Grenzen überprüft wird, ob das Kriterium bei Neufestsetzung der Grenzen auf diese Werte erfüllt wird,
f) falls das Kriterium erfüllt wird, die Linkgewichte mit der neuen Link-Kostenmetrik im Netz konfiguriert werden und die Grenzen auf die neuen Werte festgelegt werden,
**dadurch gekennzeichnet, dass**
in Schritt d) die Link-Kostenmetrik zunächst für den Transport von Verkehr durch das Netz ohne Berücksichtigung von Fehlerfällen optimiert wird und im Falle, dass im anschließenden Schritt e) festgestellt wird, dass das Kriterium bei Neufestsetzung der Grenzen auf Basis der neuen, ohne Berücksichtigung von Fehlerfällen optimierten Link-Kostenmetrik nicht erfüllt ist, zu Schritt d) zurückgegangen wird und die Link-Kostenmetrik für den Transport von Verkehr durch das Netz unter Berücksichtigung von Fehlerfällen optimiert wird.

2. Verfahren nach Anspruch 1,
**dadurch gekennzeichnet, dass**
die Optimierung der Link-Kostenmetrik unter Berücksichtigung von Fehlerfällen eine erste Optimierung umfasst, gemäß der
- in mehreren Optimierungsläufen unterschiedliche Link-Kostenmetriken, insbesondere für Multi-Path-Routing, ohne Berücksichtigung von Fehlerfällen ermittelt werden,
- für vorgegebene Fehlerfälle die Lastverteilungen dieser Link-Kostenmetriken in eine Liste von Fehlermustern aufgenommen werden, und
- von den Link-Kostenmetriken diejenige ausgewählt wird, die in den Fehlerfällen die geringste maximale Linkauslastung erzeugt.

3. Verfahren nach Anspruch 1 oder 2,
**dadurch gekennzeichnet, dass**
die Optimierung der Link-Kostenmetrik unter Berücksichtigung von Fehlerfällen eine zweite Optimierung umfasst, gemäß der
- eine Liste vorgegebener Fehlermuster gegeben ist,
- die Link-Kostenmetriken, insbesondere für Multi-Path-Routing, für die Liste vorgegebener Fehlermuster in Bezug auf die maximale Linkauslastung optimiert werden.

4. Verfahren nach Anspruch 2 und 3,
**dadurch gekennzeichnet, dass**
bei der Optimierung der Link-Kostenmetrik unter Berücksichtigung von Fehlerfällen zuerst die erste Optimierung durchgeführt wird und im Falle, dass im anschließenden Schritt e) festgestellt wird, dass das Kriterium bei Neufestsetzung der Grenzen auf Basis der gemäß der ersten Optimierung optimierten Link-Kostenmetrik nicht erfüllt ist, zu Schritt d) zurückgegangen wird und die zweite Optimierung durchgeführt wird.

5. Verfahren nach einem der vorhergehenden Ansprüche,
**dadurch gekennzeichnet, dass,**
falls das Kriterium nicht erfüllt wird, die Netzverwaltung alarmiert wird.

6. Verfahren nach einem der vorhergehenden Ansprüche,
**dadurch gekennzeichnet, dass**
das Kriterium durch die Einhaltung eines Schwellenwertes gegeben ist.

7. Verfahren nach einem der vorhergehenden Ansprüche,
**dadurch gekennzeichnet, dass**
Änderungen der Topologie des Netzes bei der Bestimmung neuer Werte für die Grenzen berücksichtigt werden.

8. Verfahren nach Anspruch 7,
**dadurch gekennzeichnet, dass**
die Durchführung des Verfahrens zur Nachführung von Netzparametern durch eine Änderung der Topologie des Netzes ausgelöst wird.

9. Verfahren nach einem der vorhergehenden Ansprüche,
**dadurch gekennzeichnet, dass**
das Verfahren mit Hilfe eines zentralen Netzkontrollservers durchgeführt wird.

10. Verfahren nach Anspruch 9,
**dadurch gekennzeichnet, dass**
der zentrale Netzkontrollserver während der Durchführung des Verfahrens einen oder mehrere Netzparameter dem Netzbetreiber bereitstellt.

11. Verfahren nach Anspruch 10,
**dadurch gekennzeichnet, dass**
die bereitgestellten Netzparameter die Blockierwahrscheinlichkeit und/oder die Paketverzögerung zwischen Knoten und/ oder Paketverluste zwischen Knoten umfassen.

12. Verfahren nach Anspruch 10 oder 11,
**dadurch gekennzeichnet, dass**
der zentralen Netzkontrollserver aktuelle und vergangene Netzparameter in einer Datenbank speichert.

13. Verfahren nach einem der Ansprüche 10 bis 12,
**dadurch gekennzeichnet, dass**
die von dem zentralen Netzkontrollserver bereitgestellten Netzparameter durch den Netzbetreiber abgerufen werden und/oder automatisiert an den Netzbetreiber übermittelt werden.

14. Verfahren nach einem der Ansprüche 9 bis 13,
**dadurch gekennzeichnet, dass**
der zentrale Netzkontrollserver aus den Netzparametern Tariftabellen für den Netzbetreiber ermittelt.

15. Verfahren nach Anspruch 14,
**dadurch gekennzeichnet, dass**
bei der Ermittlung der Tariftabellen der zentrale Netzkontrollserver aus gesammelten Messdaten die zu jeweiligen Tageszeiten zu erwartende Verkehrslast bestimmt und daraus abschätzt, wie viel zusätzliche Verkehrslast zu der jeweiligen Tageszeit ohne Ausfall von Knoten und/oder Links von dem Netz noch getragen werden kann.

16. Verfahren nach Anspruch 15,
**dadurch gekennzeichnet, dass**
bei der Ermittlung der Tariftabellen eine vom Netzbetreiber bereitgestellte Funktion berücksichtigt wird, welche in Abhängigkeit von der Tageszeit angibt, wie eine Tarifänderung die Verkehrslast verändert, wobei der zentrale Netzkontrollserver mit Hilfe der Funktion berechnet, welche Tarifänderung zu einer jeweiligen Tageszeit zu einer gleichmäßigen Verkehrslast im Netz führt.

17. Kommunikationsnetz, insbesondere paketbasiertes IP-Netz,
**dadurch gekennzeichnet, dass**
das Kommunikationsnetz derart ausgestaltet ist, das in dem Kommunikationsnetz ein Verfahren nach einem der vorhergehenden Ansprüche durch geführt wird.

18. Kommunikationsnetz nach Anspruch 17,
**gekennzeichnet durch**
einen zentralen Netzkontrollserver, eine Vielzahl von Routern, wobei in jedem Knoten ein Router vorgesehen ist, sowie eine Vielzahl von Netzzugangskontrollrechnern, wobei jedem Router ein Netzzugangskontrollrechner zugeordnet ist.

19. Netzrechner zur Verwendung als zentraler Netzkontrollserver in einem Kommunikationsnetz nach Anspruch 17 oder 18,
**dadurch gekennzeichnet, dass**
- der Netzrechner für eine verteilte Durchführung eines Verfahrens nach einem der Ansprüche 1 bis 16 ausgestaltet ist,
- der Netzrechner Mittel zur Durchführung eines Teils der Schritte des Verfahrens aufweist, und
- der Netzrechner Mittel zur Kommunikation mit zumindest einer weiteren Vorrichtung zwecks verteilter Durchführung des Verfahrens aufweist.

## Claims

1. Method for tracking network parameters in a communication network formed with nodes and links located between them, particularly in a packet-based IP network, with access controls for the purpose of limiting the traffic load, wherein the network parameters comprise a link/cost metric with link weights for the links, in which:
a) a traffic matrix for the network is regularly determined,
b) a blocking probability for traffic which is subject to an access control is determined from the current traffic matrix,
c) a check is made to determine whether the blocking probability determined satisfies a criterion for a scheduled network operation,
d) in the case where the blocking probability does not satisfy the criterion and/or a redetermination for limits used as part of the access controls using the current traffic matrix does not lead to a blocking probability which satisfies the criterion, then the current traffic matrix is used to determine a new link/cost metric for optimizing the transport of traffic through the network,
e) new values for limits used as part of the access controls are determined on the basis of the new link/cost metric and, following the determination of the new values for the limits, a check is made to determine whether the criterion is satisfied when the limits are re-established at these values,
f) if the criterion is satisfied, the link weights are configured with the new link/cost metric in the network and the limits are established at the new values,
**characterized in that**
in step d), the link/cost metric is first optimized for the transport of traffic through the network without taking into consideration error cases and in the case where it is established in the subsequent step e) that the criterion is not satisfied when the limits are re-established on the basis of the new link/cost metric optimized without taking into consideration error cases, the process returns to step d) and the link/cost metric for transporting traffic through the network is optimized taking into consideration error cases.

2. Method according to Claim 1, **characterized in that** the optimization of the link/cost metric taking into consideration error cases comprises a first optimization, according to which
- in several optimization runs, different link/cost metrics, particularly for multi-path routing, without taking into consideration error cases are determined,
- for predetermined error cases, the load distributions of these link/cost metrics are entered into a list of error patterns, and
- of the link/cost metrics, the one which generates the lowest maximum link loading in the error cases is selected.

3. Method according to Claim 1 or 2, **characterized in that** the optimization of the link/cost metric taking into consideration error cases comprises a second optimization, according to which
- a list of predetermined error patterns is given,
- the link/cost metrics, particularly for multi-path routing, are optimized with respect to the maximum link loading for the list of predetermined error patterns.

4. Method according to Claim 2 and 3, **characterized in that** in the optimization of the link/cost metric taking into consideration error cases, the first optimization is first performed and in the case where it is established in the subsequent step e) that the criterion is not satisfied when the limits are re-established on the basis of the link/cost metric optimized in accordance with the first optimization, the process returns to step d) and the second optimization is performed.

5. Method according to one of the preceding claims, **characterized in that** the network management is warned if the criterion is not satisfied.

6. Method according to one of the preceding claims, **characterized in that** the criterion is given by a threshold value being maintained.

7. Method according to one of the preceding claims, **characterized in that** changes in the topology of the network are taken into consideration in the determination of new values for the limits.

8. Method according to Claim 7, **characterized in that** the performance of the method for tracking network parameters is triggered by a change in the topology of the network.

9. Method according to one of the preceding claims, **characterized in that** the method is performed with the aid of a central network control server.

10. Method according to Claim 9, **characterized in that** the central network control server provides one or more network parameters for the network operator during the performance of the method.

11. Method according to Claim 10, **characterized in that** the network parameters provided comprise the blocking probability and/or the packet delay between nodes and/or packet losses between nodes.

12. Method according to Claim 10 or 11, **characterized in that** the central network control server stores current and past network parameters in a database.

13. Method according to one of Claims 10 to 12, **characterized in that** the network parameters provided by the central network control server are called up by the network operator and/or are conveyed in an automated manner to the network operator.

14. Method according to one of Claims 9 to 13, **characterized in that** the central network control server determines tariff tables for the network operator from the network parameters.

15. Method according to Claim 14, **characterized in that** during the determination of the tariff tables, the central network control server determines the traffic load to be expected at respective times of the day from collected measurement data and estimates from these how much additional traffic load can still be carried by the network at the respective time of the day without failure of nodes and/or links.

16. Method according to Claim 15, **characterized in that** in the determination of the tariff tables, a function provided by the network operator is taken into consideration which specifies in dependence on the time of the day how a change in tariff changes the traffic load, wherein the central network control server calculates with the aid of the function which tariff change leads to a uniform traffic load in the network at a respective time of the day.

17. Communication network, particularly packet-based IP network, **characterized in that** the communication network is arranged in such a manner that a method according to one of the preceding claims is performed in the communication network.

18. Communication network according to Claim 17, **characterized by** a central network control server, a multiplicity of routers, one router being provided in each node, and a multiplicity of network access control computers, one network access control computer being allocated to each router.

19. Network computer for use as central network control server in a communication network according to Claim 17 or 18,
**characterized in that**
- the network computer is arranged for a distributed performance of a method according to one of Claims 1 to 16,
- the network computer has means for performing a part of the steps of the method, and
- the network computer has means for communication with at least one further device for the purpose of distributed performance of the method.

## Revendications

1. Procédé pour l'ajustement de paramètres réseau d'un réseau de communication formé de noeuds et de liens entre ces noeuds, en particulier d'un réseau IP basé sur des paquets, avec des contrôles d'accès pour la limitation de la charge du trafic, les paramètres réseau comprenant une métrique de coût de liens avec des poids de liens pour les liens, dans lequel
a) une matrice de trafic du réseau est déterminée régulièrement,
b) une probabilité de blocage pour un trafic soumis à un contrôle d'accès est déterminée à partir de la matrice de trafic actuelle,
c) il est vérifié si la probabilité de blocage déterminée remplit un critère pour une exploitation du réseau conforme à la planification,
d) dans le cas où la probabilité de blocage ne remplit pas le critère et/ou une redétermination pour des limites utilisées dans le cadre des contrôles d'accès à l'aide de la matrice de trafic actuelle n'entraîne pas une probabilité de blocage qui remplit le critère, une nouvelle métrique de coût de liens est déterminée à l'aide de la matrice de trafic actuelle pour optimiser le transport du trafic sur le réseau,
e) de nouvelles valeurs pour des limites utilisées dans le cadre des contrôles d'accès sont déterminées sur la base de la nouvelle métrique de coût de liens et, après la détermination des nouvelles valeurs pour les limites, il est vérifié si le critère est rempli à la refixation des limites à ces valeurs,
f) si le critère est rempli, les poids des liens sont configurés avec la nouvelle métrique de coût de liens dans le réseau et les limites sont fixées aux nouvelles valeurs,
**caractérisé en ce que**
à l'étape d), la métrique de coût de liens est d'abord optimisée pour le transport de trafic sur le réseau compte non tenu de cas d'erreur et, dans le cas où il est constaté, à l'étape e) qui suit, que le critère n'est pas rempli à la refixation des limites sur la base de la nouvelle métrique de coût de liens optimisée compte non tenu de cas d'erreur, il y a retour à l'étape d) et la métrique de coût de liens est optimisée pour le transport de trafic sur le réseau compte tenu de cas d'erreur.

2. Procédé selon la revendication 1, **caractérisé en ce que** l'optimisation de la métrique de coût de liens compte tenu de cas d'erreur comprend une première optimisation telle que
- différentes métriques de coût de liens, et plus particulièrement pour le routage multichemin, sont déterminées dans plusieurs tours d'optimisation compte non tenu de cas d'erreur,
- pour des cas d'erreur prédéterminés, les répartitions des charges de ces métriques de coût de liens sont reprises sur une liste de modèles d'erreurs et
- parmi les métriques de coût de liens est sélectionnée celle qui génère la charge de lien maximale la plus faible dans les cas d'erreur.

3. Procédé selon la revendication 1 ou 2, **caractérisé en ce que** l'optimisation de la métrique de coût de liens compte tenu de cas d'erreur comprend une deuxième optimisation telle que
- une liste de modèles d'erreurs prédéterminés est donnée,
- les métriques de coût de liens, en particulier pour le routage multichemin, sont optimisées pour la liste de modèles d'erreurs prédéterminés eu égard à la charge de lien maximale.

4. Procédé selon la revendication 2 et 3, **caractérisé en ce que**, à l'optimisation de la métrique de coût de liens compte tenu de cas d'erreur, la première optimisation est effectuée tout d'abord et, s'il est constaté, à l'étape e) qui fait suite, que le critère n'est pas rempli à la refixation des limites sur la base de la métrique de coût de liens optimisée conformément à la première optimisation, il y a retour à l'étape d) et la deuxième optimisation est effectuée.

5. Procédé selon l'une des revendications précédentes, **caractérisé en ce que** l'administration de réseau est alertée si le critère n'est pas rempli.

6. Procédé selon l'une des revendications précédentes, **caractérisé en ce que** le critère est donné par le respect d'une valeur seuil.

7. Procédé selon l'une des revendications précédentes, **caractérisé en ce que** des modifications de la topologie du réseau sont prises en compte à la détermination de nouvelles valeurs pour les limites.

8. Procédé selon la revendication 7, **caractérisé en ce que** l'exécution du procédé d'ajustement de paramètres réseau est déclenchée par une modification de la topologie du réseau.

9. Procédé selon l'une des revendications précédentes, **caractérisé en ce que** le procédé est exécuté à l'aide d'un serveur central de contrôle de réseau.

10. Procédé selon la revendication 9, **caractérisé en ce que** le serveur central de contrôle de réseau fournit un ou plusieurs paramètres réseau à l'exploitant de réseau pendant l'exécution du procédé.

11. Procédé selon la revendication 9, **caractérisé en ce que** les paramètres réseau fournis comprennent la probabilité de blocage et/ou le retard de paquets entre noeuds et/ou des pertes de paquets entre noeuds.

12. Procédé selon la revendication 10 ou 11, **caractérisé en ce que** le serveur central de contrôle de réseau stocke des paramètres réseau actuels et passés dans une base de données.

13. Procédé selon l'une des revendications 10 à 12, **caractérisé en ce que** les paramètres réseau fournis par le serveur central de contrôle de réseau sont appelés par l'exploitant de réseau et/ou transmis de manière automatisée à l'exploitant de réseau.

14. Procédé selon l'une des revendications 9 à 13, **caractérisé en ce que** le serveur central de contrôle de réseau détermine à partir des paramètres réseau des tableaux de tarifs pour l'exploitant de réseau.

15. Procédé selon la revendication 14, **caractérisé en ce que**, à la détermination des tableaux de tarifs, le serveur central de contrôle de réseau détermine la charge de trafic attendue à des heures respectives de la journée à partir de données de mesure collectées et évalue sur cette base quelle charge de trafic supplémentaire le réseau peut encore supporter à chaque heure respective de la journée sans défaillance de noeuds et/ou de liens.

16. Procédé selon la revendication 15, **caractérisé en ce que**, à la détermination des tableaux de tarifs, une fonction fournie par l'exploitant de réseau est prise en compte, laquelle indique, en fonction de l'heure de la journée, comment une modification de tarif modifie la charge de trafic, le serveur central de contrôle de réseau calculant, à l'aide de la fonction, quelle modification de tarif entraîne, à une heure respective de la journée, une charge de trafic régulière dans le réseau.

17. Réseau de communication, en particulier réseau IP basé sur des paquets, **caractérisé en ce que** le réseau de communication se présente de manière telle qu'un procédé selon l'une des revendications précédentes est exécuté dans ledit réseau de communication.

18. Réseau de communication selon la revendication 17,
**caractérisé par** un serveur central de contrôle de réseau, une pluralité de routeurs, un routeur étant prévu dans chaque noeud, ainsi qu'une pluralité d'ordinateurs de contrôle d'accès réseau, un ordinateur de contrôle d'accès réseau étant associé à chaque routeur.

19. Ordinateur de réseau destiné à être utilisé en tant que serveur central de contrôle de réseau dans un réseau de communication selon la revendication 17 ou 18,
**caractérisé en ce que**
- l'ordinateur de réseau est réalisé pour une exécution distribuée d'un procédé selon l'une des revendications 1 à 16,
- l'ordinateur de réseau comporte des moyens pour exécuter une partie des étapes du procédé et
- l'ordinateur de réseau comporte des moyens pour communiquer avec au moins un autre dispositif aux fins de l'exécution distribuée du procédé.
